Europäisches Patentamt

European Patent Office

Office européen des brevets

(11) Publication number: **0 043 288**
**A1**

# EUROPEAN PATENT APPLICATION

(21) Application number: 81302988.1

(22) Date of filing: 01.07.81

(51) Int. Cl.³: **C 08 J 5/18**
**B 65 D 65/38**

(30) Priority: 02.07.80 GB 8021642

(43) Date of publication of application:
06.01.82 Bulletin 82/1

(84) Designated Contracting States:
BE DE FR NL SE

(71) Applicant: BXL Plastics Limited
3 St. James's Square
London, SW1(GB)

(72) Inventor: Taylor Brown, Terence John BXL Plastics
Limited
Flexible Packaging Division Huddersfield Road
Darton Barnsley Yorkshire, S75 5NA(GB)

(74) Representative: Ryan, Edward Terrence
BP INTERNATIONAL LIMITED Patents and Licensing
Division Chertsey Road
Sunbury-on-Thames Middlesex, TW16 7LN(GB)

(54) Package wrapped in plastic film.

(57) A package comprises a frozen article wrapped in a film comprising a matrix of thermoplastic polymer containing a uniformly distributed particulate organic solid formed from particles of defined dimensions.

EP 0 043 288 A1

1

## PACKAGE WRAPPED IN PLASTIC FILM

The present invention relates to a plastics film article.

Thermoplastic films are normally produced with a smooth glossy surface with a low co-efficient of friction. When such films are used to wrap articles, problems may arise in the storage and handling of articles wrapped in such film due to the tendency of the wrapped articles to slide relative to one another.

GB 1 533 027 proposed to overcome this problem by making a composite plastics film having foamed and unfoamed layers. Such a film is expensive to make and cheaper alternatives are desirable.

There have been various proposals for modifying the surface properties of thermoplastic film for various purposes.

GB 951 786 discloses the addition of a finely divided solid to thermoplastic material before it is stretched e.g. by bubble inflation i.e. blowing to give a film. The incorporation of such solid particles is said to enable the film to be written on. The only solid materials disclosed are inorganic materials such as calcium carbonate. Such inorganic fillers have the disadvantage that if the film is stretched beyond a certain point during film forming process, void formation may take place leading to the formation of an opaque product, which may be undesirable. It is also difficult to blow film satisfactorily i.e. without rupturing the bubble, if the polymer contains any substantial amount of such inorganic solids with a particle dimension in the direction of, and which is greater than, the thickness of the film being produced.

Australian patent Specification 217 890 discloses the addition of finely divided particulate solid to thermoplastic material before it is formed into film. This specification mentions the addition of organic compounds, including polymers but exemplifies only inorganic materials. The finely divided material is added to reduce the tendency of thermoplastic film to "block" i.e. the tendency for two adjacent sheets to adhere together so as to be difficult to separate. The specification explains that "blocking" has no necessary relation with case of slip.

It has been proposed to incorporate ultra high molecular weight high density polyethylene in powdered form into polyolefin film to impart anti-slip properties to the film.

We have found that when particulate high molecular weight high density polyethylene is incorporated into low density ethylene homopolymer the film formed by blowing shows no substantial advantage in anti-slip properties at normal ambient temperatures.

It is well known to preserve foodstuffs and other materials from deterioration by storing at a low temperature e.g. below 0°C, more usually below-15°C. It is also well known to enclose such materials within a package formed from a thermoplastic film.

When an article such as an animal carcass is stored in a cold sotre and wrapped in a thermoplastic film it is desirable for the film to have anti-slip properties. There is a specific problem with frozen articles wrapped in thermoplastic film because moisture can condense on the film as liquid water or as ice particles which greatly increases the tendency of the film surfaces to slip past one another. As the co-efficient of friction of conventional smooth thermoplastic film is very greatly reduced by the condensation of water vapour onto the plastic film it is particularly desirable to be able to minimise the reduction in the co-efficient of friction under these conditions. We have now found that certain thermoplastic films which sho no real advantage in resistance to slip over conventional films at normal room temperature show considerable advantages over these conventional films when used to wrap articles which are stored at low temperature such that water vapour tends to condense on the film.

According to the present invention there is provided a package comprising a frozen article wrapped in a film comprising a matrix of a thermoplastic polymer containing a uniformly distributed particluate organic solid, formed by introducing particulate organic solid comprising particles with a maximum dimension in the range 50 to 2,000 microns and a minimum dimension of no less that 50 microns into the thermoplastic polymer forming the matrix, before the film is formed.

The frozen articles which is wrapped in film may be for example a foodstuff. The invention is particularly useful when used for wrapping frozen animal carcasses stored in cold stores. The article is frozen i.e. the major part of the articles is at a temperature below 0°C or preferably below -15°C.

The film in which the article is wrapped comprises a matrix of a thermoplastic polymer. The matrix is preferably formed from an olefin polymer more preferably from a low density homo- or copolymer of theylene. It is preferred to use an ethylene homo-polymer having a density below $0.93g/cm^{-3}$ or an ethylene copolymer such as a copolymer of ethylene and vinyl acetate, ethyl acrylate or butyl acrylate.

It is preferred to use polymers which can be extruded to form film at temperatures below 220°C, preferably below 200°C. Preferably the polymers have a Melt Flow Index of less than 10g/10min preferably less than 3g/10min but above 0.1g/10min as measured according to BS 2782 Method 720A Condition 4 i.e. 2.6kg load.

The particulate organic solid may comprise any organic solid having the required particle size and physical properties under the conditions of the formation of the film containing the particles so that they retain their separate existence and not diffused into the matric polymer to form an homogenised product. Thus for example the particulate organic solid may comprise a thermoplastics polymer, a non-thermoplastic high melting organic solid or an organic solid substantially resistant to heat softening, and which does not undergo substantial decomposition under the conditions of formation of the film. This last class of organic solids may be exemplified by modified and un-modified starches, the modified starches including cross-linked starches which have good heat stability.

The particulate organic solid is preferably one which forms a strong bond with the thermoplastic which constitutes the matrix. By a strong bond we mean a bond which is sufficiently strong that the film may be formed from the mixture of matricx thermoplastic and particulate solid without any substantial weakening and rupture of the film itself occurring during its production as a result of any rupturing of the bond betwen the matrix and the organic solid.

The particulate organic solid is most perferably such that the bond is strong enough to withstand the forces imposed during normal streching operations employed in film production to the extent that the film may be formed without any substantial production of voids resulting from the rupturing of the bond between the matrix and the organic solid giving rise to an opaque product or any rupturing of the film itself.

In general the bond strength is preferably such that the film product may be stretched at room temperature in the longitudinal and transverse directions respectively, by at least 2:1 preferably at least 4:1 without the film itself rupturing as a consequence of bond rupture.

The strong bond between the matrix and organic solid particles is preferably obtained by using thermoplastic polymer as the particulate organic solid. Exemplary of such thermoplastics polymers are polyamides, such as the nylons, linear polyesters such as polyethylene terephthalate, polycarbonates, polyacetals and polyolefins. The molecular weight of such thermoplastic polymer must of course be sufficiently high that the softening or melting characteristics of the solid particles under the conditions of film formation are such that they substantially retain their separate existence and are not diffused into the matrix polymer to form an homogenised product. It is particularly preferred to use high molecular weight high density ethylene polymers. In the latter case the weight average molecular weight is preferably in excess of 15,000 more preferably in excess of 250,000 and the denisty is preferably in excess of $0.93g.cm^{-3}$ more preferably in excess of $0.94g.cm^{-3}$ but the Melt Flow Index should be less than 0.1g/10min as measured according to BS 2782, Method 720A using Condition 4 i.e. a load of 2.16kg.

The particulate organic solid may be incorporated into the matrix polymer at any convenient stage before film formation. The particulate organic solid incorporated into the matrix polymer comprises particles having a maximum dimension in the range 50 to 250,000 and the denisty is preferably in excess of $0.93\text{g.cm}^{-3}$ more preferably in excess of $0.94\text{g.cm}^{-3}$ but the Melt Flow Index should be 0.1g/10min as measured according to BS 2782, Method 720A using Condition 4 i.e. a load of 2.16kg.

The particulate organic solid may be incorporated into the matrix polymer at any convenient stage before film formation. The particulate organic solid incorporated into the matrix polymer comprises particles having a maximum dimension in the range 50 to 2,000 microns and a minimum dimension not less than 50 microns and preferably at least a predominant proportion by weight of particles having a maximum dimension in the range 500 to 2,000 microns and a minimum dimension of not less than 200 microns.

The choice of particle size is determined principally by the thickness of the main body of film in the final product which should be less than, preferably no greater than half of, the dimension of at least a majority of the particles measured in the same direction in the final product so that the majority of particles inevitably extend beyond the main body of the film. The films employed in the present invention will have a thickness in the main body of the film which is less than 1,000 microns, preferably below 200 microns but above 20 microns, preferably above 35 microns, more preferably above 50 microns.

The quantity of particulare organic solid is preferably not in excess of 2% by weight (based on the total weight of matrix polymer plus additives including the particulate organic solid) and is more preferably in the range 0.2 to 1% by weight.

The film may be formed by any of the known methods but is preferably produced by the well known film blowing process in which polymer is extruded through a die to form a tube which is inflated with air to give a bi-axially stretched polymer film. The film may for example be stretched sufficiently to give a film of thickness 50 microns in the main body of the film.

It will be appreciated that the die opening must be chosen so as not to interfere undesirably with the passage of the organic solid particles during extrusion of the film precursor. It will be appreciated also that the organic solid particles may soften or partially melt during the film forming process but not so that they lose their separate existence or diffuse into the matrix polymer to form an homogeneous product.

Typical film forming conditions which may be employed for an ethylene copolymer matrix thermoplastic containing a high molecular weight high density ethylene polymer would be:

Extrusion melt temperature: 150°C to 220°c.

Blow ratio: at least 1.5:1 preferably at least 2:1.

Longitudinal stretch ratio: at least 1.5:1 preferably at least 2:1.

The present invention will now be further described with reference to the following Example, which is intended to illustrate but in no way limit the scope of the invention:-

Example 1

In accordance with the invention 100 parts of a low density ethylene homopolymer of density $0.92g.cm^{-3}$ and MFI 1.0 (as measured according to BS 2782 Method 720A Condition 4) and sold by BXL Plastics Limited under the designation DFDG 4262 and 0.5 part of a high molecular weight high density polyethylene having a density of $0.954g.cm^{-3}$, an MFI of 2.5g/10min (measured according to BS 2782 Method 720A employing condition number 7 i.e. 21.6kg load) having a weight average molecular weight of 290,000 and comprising particles having maximum dimension in the range 50 to 2,000 microns a minimum dimension no less than 50 microns, and a predominant proportion by weight of the particles having a maximum dimension in the range 500 to 2,000 microns and a minimum dimension no less than 200 microns and sold by BP Chemicals Limited under the designation of Rigidex H020-54P ("Rigidex" is a trade mark) were mixed together and extruded at a melt temperature of 170°C on a 75mm Shaw extruder fitted with a 150mm Gloenco annular die. A blow ratio of 2.6:1 was used with a longitudinal stretch ratio of 3:1 and an output rate of 30kg/hour.

Film was produced as 620mm layflat at a film substance weight of 90g/m² and main body film thickness of about 100 microns.

The co-efficient of dynamic friction in two samples of the film was measured at -17°C with the film surfaces (a) dry and (b) covered with a condensation mist. The results are given in Table 1.

## Comparative Test A

This is a comparative test not in accordance with the invention the co-efficient of friction between two samples of film made as in Example 1 was measured at 20°C, the film surface was dry. The results are given in Table 1.

## Comparative Test B

This is a comparative test not in accordance with the invention.

Film was produced as in Example 1 but without the incorporation of the high density high molecular weight polyethylene. The co-efficient of friction was measured as before and the results are given in Table 1.

### Table 1

| Temperature | Surface Condition | Co-efficient of Friction | |
|---|---|---|---|
| | | Film + no additives | Film + 0.5% powder |
| 20°C | Dry | 0.6 (Test B) | 0.6 (Test A) |
| a) -17°C | Dry | 0.4 (Test B) | 0.6 (Example 1) |
| b) -17°C | Condensation Mist | 0.1 (Test B) | 0.3 (Example 1) |

## Example 2

A film was made as in Example 1 but using a low density ethylene vinyl acetate copolymer containing 12% by weight of units derived from vinyl acetate and having a density of 0.94g.cm$^{-3}$ and a Melt Flow Index of 0.35g/10min (insead of 1.0).

The co-efficient of dynamic friction was measured at -17°C with the film surfaces (a) dry and (b) covered in condensation mist. The results are given in Table 2.

## Example 3

A film was made and tested as in Example 1 but with the following differences. The matrix polymer was ethylene butyl acrylate copolymer containing 3% by weight of units derived from butyl acrylate, having a MFI of 0.2g/10min and supplied by Unifos Kemi AB under the designation NEWS 0320.

The extruder melt temperature was 180°C and the film had a substance weight of $70g.m^{-2}$ and main body thickness of 75 microns.

The results are given in Table 2.

Example 4

A film was made and tested as in Example 3 but using an ethylene ethylacrylate copolymer containing 15% by weight of units derived from ethylacrylate, hving a MFI of 1.5g/10min and supplied by BP Chemicals Belgium under the designation DPDM-6182.

The results are given in Table 2.

Comparative Test C

As Example 2 but without the high molecular weight high density polyethylene.

Comparative Tests D and E

As Examples 3 and 4 but without the high molecular weight high density polyethylene.

Table 2

| Experiment | Surface Condition | Co-efficient of Friction |
|------------|-------------------|--------------------------|
| Example 2 | Dry | 0.8 |
| | Condensation Mist | 0.3 |
| Test C | Dry | 0.3 |
| | Condensation Mist | 0.1 |
| Example 3 | Dry | 0.6 |
| | Condensation Mist | 0.3 |
| Test D | Dry | 0.5 |
| | Condensation Mist | 0.1 |
| Example 4 | Dry | 0.9 |
| | Condensation Mist | 0.3 |
| Test E | Dry | 0.7 |
| | Condensation Mist | 0.1 |

All experiments carried out at -17°C.

Frozen packages in accordance with the invention such as frozen animal carcasses show a significant improvement in slip resistance.

Claims:

1. A package comprising a frozen article wrapped in a film comprising a matrix of a thermoplastic polymer containing a uniformly distributed particulate organic solid, formed by introducing particulate organic solid comprising particles with a maximum dimension in the range 50 to 2,000 microns and a minimum dimension no less than 50 microns into the thermoplastic polymer forming the matrix belore the film is formed.

2. A package according to Claim 1 wherein the particulate organic solid comprises particles containing at least a predominant proportion by weight of particles having a maximum dimension in the range 500 to 2,000 microns and a minimum dimension no less than 200 microns.

3. A package according to Claim 1 or 2 in which the article is an animal carcass.

4. A package according to any one of Claims 1, 2 or 3 wherein the major part of the article is at a temperature of below -15°C.

5. A package according to any one of the preceding claims wherein the matrix of the film is an olefin polymer.

6. A package according to Claim 5 wherein the polymer is a low density homo- or copolymer of ethylene.

7. A package according to Claim 6 wherein the density of the homo-polymer is less than $0.93\text{g.cm}^{-3}$.

8. A package according to any one of the preceding claims where the particulate solid is one which forms a strong bond with the thermoplastic polymer which constitutes the matrix.

9. A package according to Claim 8 wherein the bond is such that the film is formed without any substantial production of voids resulting from the bond rupture giving rise to an opaque product or any rupturing of the film itself.

1

10. A package according to Claim 8 wherein the bond is such that the film may be stretched at room temperature in the longitudinal and transverse directions respectively, by at least 2:1 preferably at least 4:1 without the film itself rupturing as a consequence of bond rupture.

11. A package according to any one of the preceding claims wherein the particulate organic solid is a thermoplastics polymer.

12. A package according to Claim 11 wherein the particulate organic solid is a polyamide, a linear polyester, a polycarbonate, a polyacetal or a polyolefin.

13. A package according to any one of the preceding claims wherein the particulate organic solid is a high molecular weight high density polymer of ethylene.

14. A package according ot Claim 13 wherein the high molecular weight high density polymer of ethylene has a weight average molecular weight in excess of 150,000 and preferably in excess of 250,000 and has a density in excess of $0.93g.cm^{-3}$ preferably in excess of $0.94g.cm^{-3}$.

15. A package according to any one of the preceding claims wherein the quantity of particulate organic solid is not in excess of 2% by weight based on the total weight of matrix polymer and additives including the particulate organic solid.

16. A package according to any one of the preceding claims wherein the thickness of the main body of the film is no greater than half of the dimension of at least a majority of the particles measured in the same direction.

| | | | | | |
|---|---|---|---|---|---|
| | European Patent Office | **EUROPEAN SEARCH REPORT** | | Application number EP 81 30 2988 | |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.³) |
|---|---|---|---|
| X | DE - A - 2 008 687 (SCHLAYER-POLYDRESS) <br> * Claims; page 3, 2nd paragraph * | 1,2,5, 11,12 | C 08 J 5/18 <br> B 65 D 65/38 |
| X | DE - A - 1 769 474 (BASF) <br> * Whole document * | 1-16 | |
| D | AU - A - 217 890 (ICI) <br> * Claims; page 3, lines 1-2 * | 1 | |

**TECHNICAL FIELDS SEARCHED (Int. Cl.³)**

C 08 J 5/18

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 12-10-1981 | VAN GOETHEM |

EPO Form 1503.1   06.78